# FASCICULE DE BREVET EUROPEEN

(11) **EP 0 481 832 B1**
(45) Date de publication et mention de la délivrance du brevet: **06.09.1995**
(21) Numéro de dépôt: 91402445.0
(22) Date de dépôt: 13.09.1991
(51) Int. Cl.: H04N 5/645, B23P 19/00

(54) **Procédé d'assemblage du tube d'un moniteur sur un cadre et machine d'assemblage**
Verfahren zur Montage einer Monitorröhre auf einen Rahmen und eine Montagemaschine
Method for assembling a monitor tube on a frame and assembly machine

(30) Priorité: 14.09.1990 FR 9011408
(43) Date de publication de la demande: 22.04.1992
(73) Titulaire: BULL S.A., 92800 Puteaux (FR)
(72) Inventeur: Piguillem, François, F-92220 Bagneux (FR); Clain, Jean-Michel, F-91420 Morangis (FR); Latte, Eric, F-91150 Etampes (FR)
(74) Mandataire: Colombe, Michel

(56) Documents cités:
- EP-A- 0 179 955
- PATENT ABSTRACTS OF JAPAN, vol. 1, no. 165 (E-77)(9267) 26 Décembre 1977;& JP-A-52 111 327

## Description

La présente invention concerne un procédé d'assemblage du tube d'un moniteur sur un cadre de face avant du moniteur et une machine d'assemblage mettant en oeuvre le procédé.

Il est connu dans les procédés de fabrication des moniteurs de monter le tube sur un boîtier arrière et ensuite de venir centrer le cadre de la face avant du moniteur par rapport à cet ensemble.

Une autre méthode de montage d'un tube de moniteur consiste, comme enseigné par les brevets DE-A-3543433, DE-C-3713939 ou EP-A-0179955, à centrer le tube par rapport à la face avant constituée par le cadre mais cette méthode implique la nécessité de prévoir des éléments de centrage qui rendent plus complexe la réalisation de la face avant et imposent des tolérances beaucoup plus strictes.

Un premier but de l'invention est donc de permettre le montage d'un tube sur la face avant d'un moniteur tout en assurant son centrage de manière simple. Ce but est atteint par le fait que le procédé d'assemblage du tube d'un moniteur sur un cadre de face avant de moniteur comporte les étapes suivantes :
a) Mise en place d'un cadre de face avant dans un logement prévu à cet effet ;
b) maintien du tube en sustentation par soufflage;
c) centrage du tube par l'intermédiaire de deux Vés, à déplacement simultané se rapprochant de part et d'autre dudit tube, tout en assurant le maintien en sustentation du tube;
d) renversement du flux d'air pour assurer le maintien du tube en position centrée par aspiration,puis ouverture des Vés;
e) descente du tube solidaire du système d'aspiration à l'intérieur de la face avant pour l'amener en appui sur des zones de fixation disposées sur le pourtour du cadre de la face avant;
f) solidarisation du tube avec la face avant;
g) arrêt de l'aspiration et libération de l'ensemble assemblé.

Selon une autre caractéristique, le procédé comporte entre l'étape (a) et l'étape (b) une étape de mise en place de rondelles d'amortissement sur les zones de fixation du cadre sur lesquelles le tube est ensuite amené en appui.

Selon une autre caractéristique, le procédé comporte entre l'étape (d) et l'étape (e) une étape de mise en place de rondelles d'amortissement sur le tube et de mise en place d'un châssis sur ces rondelles.

Un autre but de l'invention est de proposer une machine d'assemblage de tube de moniteur sur le cadre de face avant qui soit entièrement automatisable, simple et robuste, et qui permette d'obtenir le centrage du tube avec une bonne précision.

Ce but est atteint par le fait que la machine d'assemblage d'un tube de moniteur sur un cadre de face avant permettant la mise en oeuvre du procédé comporte une table pourvue d'un logement destiné à accueillir la face avant du moniteur formant cadre, ledit logement comportant dans son centre une ouverture, une ventouse d'aspiration ou de soufflage mobile selon un axe vertical passant par le centre de symétrie du logement et actionnée par un vérin, un dispositif de centrage du tube cathodique actionné par un vérin, un ensemble de deux plateaux mobiles commandé en déplacement transversal par rapport à l'ouverture par des vérins pour amener les outils de fixation en position.

Selon une caractéristique supplémentaire, le dispositif de centrage est constitué d'une paire de jeux de colonnes montées verticalement sur la table et supportant à leur extrémité des galets, chaque jeu formant un chemin de roulement pour des plaques de centrage disposées de part et d'autre de l'ouverture, lesdites plaques de centrage comportant des doigts en forme de Vé sur leur côté voisins de l'ouverture et une rainure oblique orientée de droite à gauche pour la plaque située à gauche de l'ouverture et de gauche à droite pour la plaque située à droite de l'ouverture et inclinée de façon à commander le rapprochement des plaques de centrage lors du déplacement d'un doigt d'actionnement commandé par un vérin.

Selon une autre caractéristique, les doigts d'actionnement sont solidaires d'une pièce en U constituée par deux plaques reliées par une barre transversale actionnée par un seul vérin et dont les jambes du U coulissent entre les galets selon une direction perpendiculaire à la direction de coulissement des plaques de centrage.

Selon une autre caractéristique, les deux plateaux coulissent entre les galets et supportent les outils de vissage, de soudure ou du collage de l'assemblage.

D'autres caractéristiques et avantages de la présente invention apparaîtront plus clairement dans la description ci-après faite en référence aux dessins annexés représentatifs d'un mode non limitatif de réalisation de l'invention, dans lesquels :
- la figure 1 représente une vue schématique de l'opération de centrage du tube pendant une phase de sustentation ;
- la figure 2 représente une vue schématique de l'opération d'aspiration du tube et d'ouverture des Vés;
- la figure 3 représente une vue schématique de la phase de mise en place du tube centré sur la face avant ;
- la figure 4 représente une vue en perspective de la machine permettant de mettre en oeuvre le procédé ;
- la figure 5 représente une vue en perspective avec coupe partielle d'un moniteur assemblé selon le procédé de l'invention.

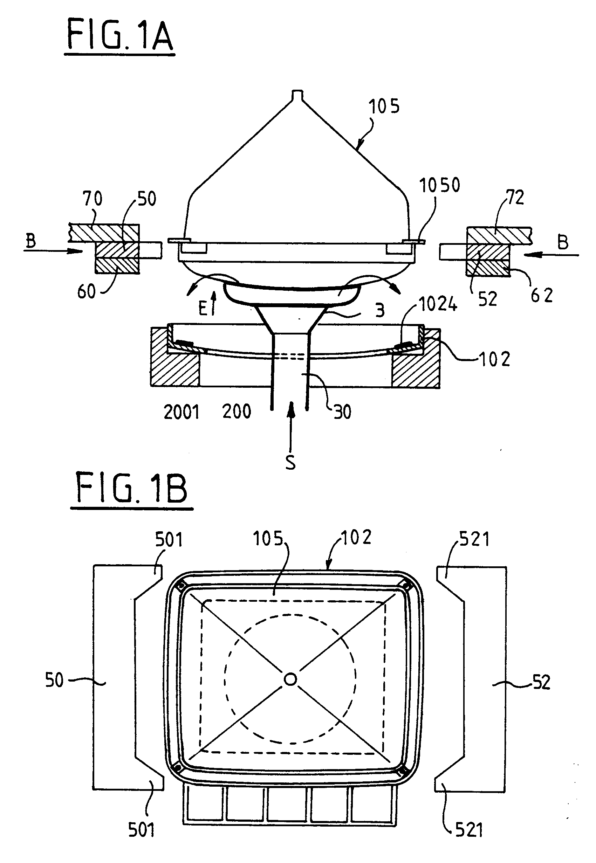

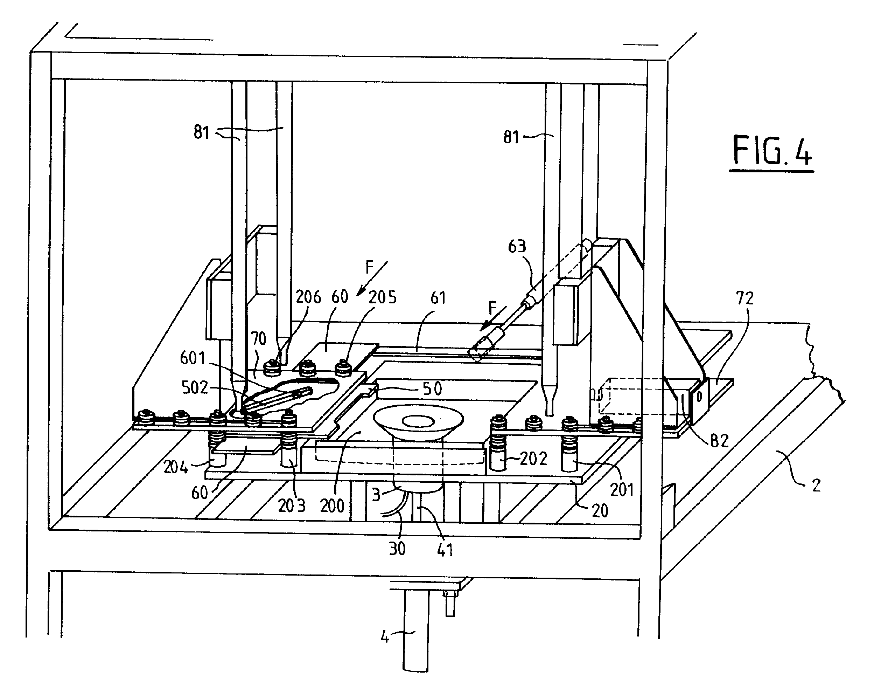

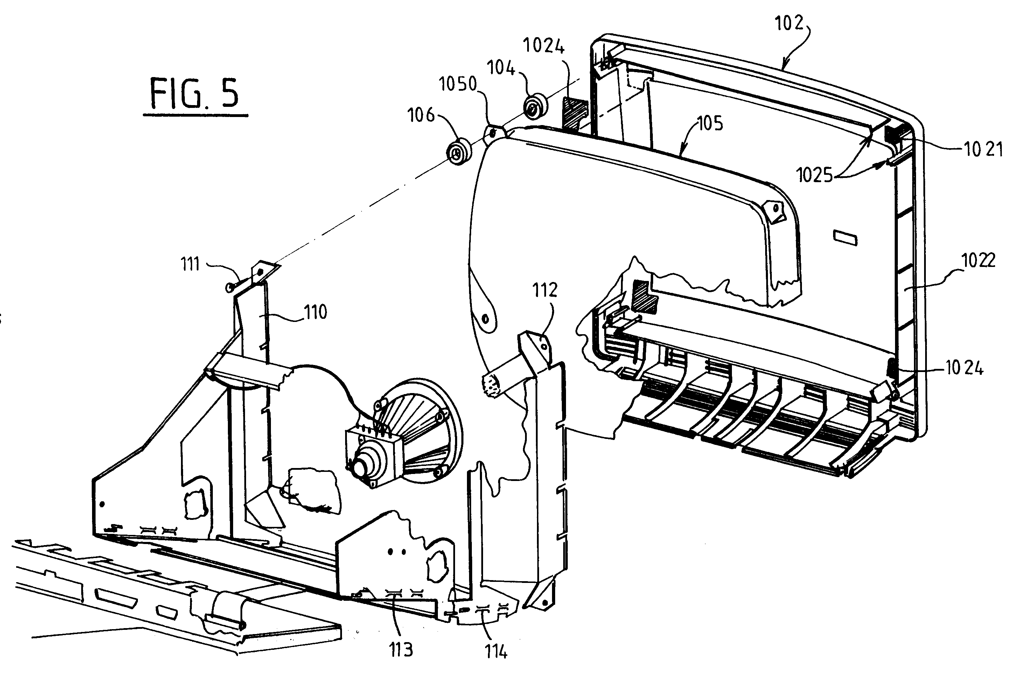

La machine permettant la mise en oeuvre du procédé va maintenant être décrite en relation avec la figure 4. Cette machine permet un assemblage automatisé du tube (105) (figure 5) d'un moniteur comportant une face avant (102) pourvue d'une ouverture (1020) formant cadre. Le tube (105) est centré par rapport à cette face avant (102) et immobilisé au moyen de rondelles d'amortissement (104) par des pattes (1050) situées aux quatre coins du tube (105.) Dans une variante, le tube peut simplement être maintenu à l'aide de moyens adhésifs (1024) tels que ceux placés aux angles du cadre (102). Le cadre (102) comporte aux 4 angles correspondant à la position des pattes (1050) de fixation du tube, des bossages (1021) pourvus d'un trou taraudé pour permettre la réception d'une vis de fixation (111). De part et d'autre des bossages (102), des nervures (1025) permettent de maîtriser la déformation des rondelles d'amortissement. Le cadre du tube (102) comporte des flancs latéraux (1022) qui permettent l'emboîtement d'un boîtier arrière non visible sur la figure. Des rondelles d'amortissement (106) sont également disposées entre les pattes (1050) de fixation du tube sur le cadre (102) et un châssis arrière (110) afin, entre autres, de compenser les dispersions dues aux tolérances de fabrication des tubes. Les cartes de circuit imprimé commandant le fonctionnement du moniteur sont montées sur ce châssis arrière (110) dans des rainures (113,114) formées à cet effet par découpe et déformation de la tôle du châssis (110). Le moniteur ainsi constitué est assemblé à l'aide de la machine de la figure 4 qui comporte un bâti (2) sur lequel est montée une table (20) comportant à sa partie supérieure, et solidaires de celle-ci, une paire de jeux de colonnettes (201-202-203-204-205-206 et 207-208 non visibles). La table (20) comporte en son centre une ouverture (200) de forme et de dimension correspondant substantiellement à la dimension de l'ouverture (1020) du cadre. Les bords de l'ouverture (200) dans la table (20) comportent des épaulements (2001) formant à la périphérie de cette ouverture un logement de dimension correspondant aux dimensions extérieures du cadre (102) dans lequel la face avant est maintenue. Un premier jeu de colonnes (201,202,207,208) est situé d'un côté de l'ouverture tandis qu'un deuxième jeu de colonnes (203,204,205,206) est placé de l'autre côté de l'ouverture et en vis-à-vis du premier jeu. Chaque jeu de colonnes placé d'un côté de l'ouverture comporte au moins une paire (203,204) de colonnes qui constitue au moins avec une autre paire de colonnes située du même côté de l'ouverture un chemin de guidage assurant le coulissement de plaques (50,60,70), (52,62,72). Le centre de l'ouverture (200) est confondu avec un axe vertical et sur lequel est disposée une ventouse (3) creuse reliée par un tuyau (30) à un ensemble d'aspiration soufflerie (31) non représenté. Cette ventouse (3) est solidaire d'un vérin (4) par une tige (41) qui permet de communiquer à cette ventouse des déplacements verticaux selon le sens de la flêche E de la figure 1. Les plaques (50,52) coulissent transversalement selon les flêches B de la figure 1 au-dessus des plaques inférieures (60,62) qui coulissent longitudinalement d'avant en arrière selon la flêche F de la figure 4. Au-dessus des plaques (50) se trouvent des plaques (70,72) de support des outils de fixation (81) constitués par des tournevis électriques, par exemple dans le cas de l'utilisation d'une fixation par vis comme représenté à la figure 5. Dans le cas où on utilise une fixation par soudure ou collage, les tournevis seront remplacés par les outils adéquats. Les plaques (70,72) coulissent entre les galets des colonnes formant les chemins de coulissement selon les directions indiquées par la flêche B à la figure 1. Chaque plaque (50,52) est pourvue du côté de l'ouverture (200) de doigts (501,521) formant un Vé comme représenté à la figure 1b. Chaque plaque (50,52) comporte une rainure (502) orientée de droite à gauche pour la plaque (50) située à gauche de l'ouverture, et de gauche à droite pour la plaque (52) située à droite de l'ouverture. Dans cette rainure, coulisse un doigt (601,621) solidaire de la plaque respective (60,62). Lorsque les plaques (60,62) se déplacent dans le sens de la flêche F, les doigts (601,621) se déplaçant dans les rainures (502,522) provoquent le rapprochement des doigts (501,521) en forme de Vé l'un de l'autre. Le déplacement des plaques (60,62) rendues solidaires par une tige transversale (61), est commandée par un vérin (63) qui agit sur la tige transversale (61). Les plateaux (70,72) situés au-dessus des plaques à Vé de centrage sont déplacés en translation vers le centre de l'ouverture (200) par les vérins (80,82).

La machine que l'on vient de décrire en relation avec la figure 4 est utilisée pour assembler des moniteurs du type de ceux décrits en relation avec la figure 5 selon un procédé qui va maintenant être décrit en liaison avec les figures 1 à 3.

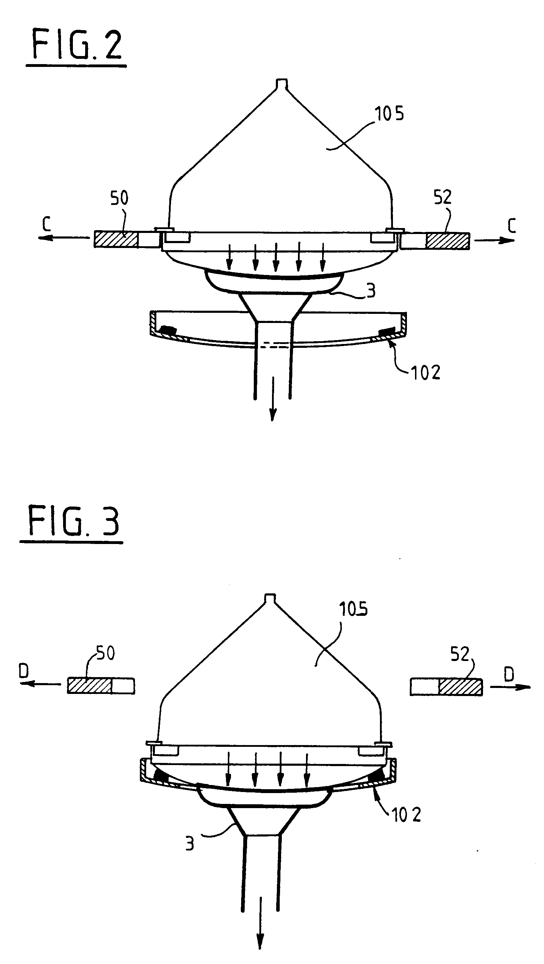

Lorsque l'on veut assembler un moniteur, on place le cadre (102) de la face avant dans la contreforme formée par l'épaulement (2001) de l'ouverture (200) de la table (20). La ventouse (3) est élevée par le vérin (4) au-dessus de la surface de la table (20). Un bras de manipulation où un opérateur vient placer sur cette ventouse (3) le tube (105) du moniteur. Dans cette phase, l'intérieur de la ventouse (3) est alimenté par le tube (30) de façon à souffler de l'air. Cet air maintient en sustentation le tube (105) au-dessus de la ventouse (3). L'avancement de la ventouse (3) est calculé de façon que le tube (105) en sustentation au-dessus de la ventouse se trouve avec les ergots (1050) de fixation du tube au-dessus du plan supérieur des plaques (50,52) formant Vé de centrage. Ensuite les Vés de centrage (501,521) sont actionnés pour venir enserrer le tube dans leur découpe en Vé et le centrer. Le tube étant maintenu centré par les doigts en Vé, le sens de fonctionnement du distributeur d'air est inversé pour le faire fonctionner en aspiration. La ventouse (3) à ce moment-là attire le tube (105) contre elle-même et le maintient dans la position déterminée par les Vés. Ces derniers peuvent ensuite être actionnés dans le sens de la flêche C de la figure 2 pour s'écarter du tube (105). L'ensemble ventouse-tube est ensuite déplacé vers le bas par le vérin (4) de façon à amener le tube en contact avec la face avant (102) du cadre, comme représenté à la figure 3 sur laquelle pour des raisons de clarté du dessin, on a omis de représenter la contreforme (2001) sur laquelle repose la face avant. Le centrage du tube sur la face avant peut être maintenu, soit par des portions adhésives (1024) disposées sur le pourtour du cadre de la face avant, soit par un mode de fixation par vissage ou soudure ou thermo-déformation de doigts en plastique passant à travers des ouvertures des pattes de fixation (1050) du tube et du châssis (112). Les phases de mise en place du tube sur le cadre (102) sont complétées d'une étape de mise en place du châssis (110) qui peut être effectuée soit manuellement soit automatiquement par un bras manipulateur. De même, au cours de l'étape de descente du tube sur le cadre (102), on aura pris soin de mettre en place, si nécessaire, des rondelles d'amortissement (104) entre le bossage (1021) du cadre et les pattes d'attache (1050) du tube. Si nécessaire, on prendra soin également de mettre en place entre les pattes d'attache du tube (1050) et les pattes de fixation (112) du châssis des rondelles d'amortissement (106). Ensuite, l'assemblage se termine par une étape de fixation de l'ensemble cadre/tube/châssis qui peut, comme représenté à la figure 5, être constituée par un vissage de vis (111) à l'aide de tournevis électriques (81) mis en place automatiquement par les chariots (70,72) actionnés par les vérins (80,82). Dans une autre variante de réalisation, les bossages (1021) peuvent être remplacés par des tenons en matière thermo-déformable qui viendraient passer dans les orifices des pattes de fixation (1050) du tube et (112) du châssis et que l'on déformerait ensuite par chauffage pour assurer l'assemblage.

## Revendications

1. Procédé d'assemblage d'un tube (105) d'un moniteur sur un cadre (102) de face avant du moniteur caractérisé en ce qu'il comporte les étapes suivantes:
a) mise en place d'un cadre (102) de face avant dans un logement (2001) prévu à cet effet;
b) maintien du tube (105) en sustentation par soufflage;
c) centrage du tube (105) par l'intermédiaire de deux Vés (501, 521), à déplacement simultané se rapprochant de part et d'autre dudit tube, tout en assurant le maintien en sustentation du tube (105);
d) renversement du flux d'air pour assurer le maintien du tube (105) en position centrée par aspiration,puis ouverture des Vés (501, 521);
e) descente du tube (105) solidaire du système (3) d'aspiration à l'intérieur de la face avant (102) pour l'amener en appui sur des zones (1024) de fixation disposées sur le pourtour du cadre (102) de la face avant;
f) solidarisation du tube (105) avec la face avant (102);
g) arrêt de l'aspiration et libération de l'ensemble assemblé.

2. Procédé d'assemblage selon la revendication 1, caractérisé en ce qu'il comporte entre l'étape (a) et l'étape (b) une étape de mise en place de rondelles d'amortissement (104) sur les zones (1024) de fixation du cadre (102) sur lesquelles le tube (105) est ensuite amené en appui.

3. Procédé d'assemblage selon la revendication 1 ou 2, caractérisé en ce qu'il comporte entre l'étape (d) et l'étape (e) une étape de mise en place de rondelles d'amortissement (106) sur le tube et de mise en place d'un châssis (110) sur ces rondelles (106).

4. Machine d'assemblage de tube de moniteur sur un cadre de face avant (102) permettant la mise en oeuvre du procédé selon une des revendications 1 à 3 caractérisée en ce qu'elle comporte une table (20) pourvue d'un logement (2001) destiné à accueillir la face avant (102) du moniteur formant cadre, ledit logement (2001) comportant dans son centre une ouverture (200), une ventouse (3) d'aspiration ou de soufflage mobile selon un axe vertical passant par le centre de symétrie du logement (2001) et actionnée par un vérin (4), un dispositif de centrage (50, 52) du tube cathodique actionné par un vérin (63), un ensemble de deux plateaux mobiles (70, 72) commandé en déplacement transversal par rapport à l'ouverture par des vérins (80, 82) pour amener les outils (81) de fixation en position.

5. Machine selon la revendication 4 caractérisée en ce que le dispositif de centrage est constitué d'une paire de jeux (201, 202, 207, 208) (203, 204, 205, 206) de colonnes montées verticalement sur la table (20) et supportant à leur extrémité des galets, chaque jeu formant un chemin de roulement pour des plaques de centrage (50, 52) disposées de part et d'autre de l'ouverture (200), lesdites plaques de centrage (50, 52) comportant des doigts (501, 521) en forme de Vé sur leur côté voisins de l'ouverture (200) et une rainure oblique (502, 522) orientée de droite à gauche pour la plaque (50) située à gauche de l'ouverture et de gauche à droite pour la plaque (52) située à droite de l'ouverture et inclinée de façon à commander le rapprochement des plaques de centrage lors du déplacement d'un doigt (601, 621) d'actionnement commandé par un vérin (63).

6. Machine selon la revendication 5 caractérisée en ce que les doigts d'actionnement (601, 621) sont solidaires d'une pièce en U constituée par deux plaques (60, 62) reliées par une barre transversale (61) actionnée par un seul vérin (63) et dont les jambes du U coulissent entre les galets selon une direction perpendiculaire à la direction de coulissement des plaques de centrage (50, 52).

7. Machine selon la revendication 4 ou 5, caractérisée en ce que les deux plateaux (60, 70) coulissent entre les galets et supportent les outils de vissage (81) ou de soudure ou de collage de l'assemblage.

## Patentansprüche

1. Verfahren zur Montage einer Röhre (105) eines Monitors an einem vorderseitigen Rahmen (102) des Monitors, dadurch gekennzeichnet, daß es die folgenden Schritte umfaßt:
a) Einsetzen eines vorderseitigen Rahmens (102) in eine zu diesem Zweck vorgesehene Aufnahme (2001);
b) schwebendes Halten der Röhre (105) durch Blasen;
c) Zentrieren der Röhre (105) über zwei V-förmige Einrichtungen (501, 521) mit gleichzeitiger Verschiebung, die sich beiderseits der Röhre annähern und dabei gleichzeitig das schwebende Halten der Röhre (105) gewährleisten;
d) Umkehrung des Luftstroms, um das Halten der Röhre (105) an zentrierter Position durch Ansaugen zu gewährleisten, und dann Öffnen der V-förmigen Einrichtungen (501, 521);
e) Absenken der mit dem Ansaugsystem (3) fest verbundenen Röhre (105) in das Innere der Vorderseite (102), um sie an Befestigungszonen (1024) in Anlage zu bringen, die am Umfang des Rahmens (102) der Vorderseite angeordnet sind;
f) feste Verbindung der Röhre (105) mit der Vorderseite (102);
g) Anhalten des Ansaugens und Freigabe der montierten Einheit.

2. Montageverfahren nach Anspruch 1, dadurch gekennzeichnet, daß es zwischen dem Schritt (a) und dem Schritt (b) einen Schritt des Einsetzens von Dämpfungsscheiben (104) an den Befestigungszonen (1024) des Rahmens (102) umfaßt, an denen die Röhre (105) dann in Anlage gebracht wird.

3. Montageverfahren nach Anspruch 1 oder 2, dadurch gekennzeichnet, daß es zwischen dem Schritt (d) und dem Schritt (e) einen Schritt des Einsetzens von Dämpfungsscheiben (106) an der Röhre und des Einsetzens eines Gestells (110) an diesen Scheiben (106) aufweist.

4. Maschine zur Montage für eine Monitorröhre an einem vorderseitigen Rahmen (102), die die Durchführung des Verfahrens nach einem der Ansprüche 1 bis 3 ermöglicht, dadurch gekennzeichnet, daß sie einen mit einem Sitz (2001) versehenen Tisch (20), der zur Aufnahme der einen Rahmen bildenden Vorderseite (102) des Monitors bestimmt ist, wobei der Sitz (2001) in seinem Zentrum eine Öffnung (200) aufweist, einen Ansaug- oder Blasnapf (3), der längs einer vertikalen, durch das Symmetriezentrum des Sitzes (2001) verlaufenden Achse bewegbar ist und durch einen Zylinder (4) betätigt wird, eine von einem Zylinder (63) betätigte Einheit (50, 52) zum Zentrieren der Kathodenstrahlröhre sowie eine Einheit aus zwei beweglichen Scheiben (70, 72) aufweist, die durch Zylinder (80, 82) bezüglich der Öffnung in Querverschiebung gesteuert werden, um die Befestigungswerkzeuge (81) in Position zu bringen.

5. Maschine nach Anspruch 4, dadurch gekennzeichnet, daß die Zentriereinrichtung aus einem Paar von Sätzen (201, 202, 207, 208), (203, 204, 205, 206) von Säulen gebildet ist, die vertikal an dem Tisch (20) angebracht sind und an ihrem Ende Rollen tragen, wobei jeder Satz einen Rollweg für Zentrierplatten (50, 52) bildet, die beiderseits der Öffnung (200) angeordnet ist, wobei die Zentrierplatten (50, 52) V-förmige Finger (501, 521) an ihrer der Öffnung (200) benachbarten Seite sowie eine schräge Nut (502, 522) aufweisen, die für die links von der Öffnung gelegene Platte (50) von rechts nach links orientiert und für die rechts von der Öffnung gelegene Platte (52) von links nach rechts orientiert und derart geneigt ist, daß die Annäherung der Zentrierplatten bei der Verschiebung eines Betätigungsfingers (601, 602) gesteuert wird, der durch einen Zylinder (63) gesteuert wird.

6. Maschine nach Anspruch 5, dadurch gekennzeichnet, daß die Betätigungsfinger (601, 621) fest mit einem U-förmigen Teil verbunden sind, das durch zwei Platten (60, 62) gebildet ist, die durch eine Querstange (61) verbunden sind, die von einem einzigen Zylinder (63) betätigt wird, und dessen das U bildende Schenkel zwischen den Rollen entlang einer Richtung gleiten, die senkrecht zur Gleitrichtung der Zentrierplatten (50, 52) ist.

7. Maschine nach Anspruch 4 oder 5, dadurch gekennzeichnet, daß die beiden Scheiben (60, 70) zwischen den Rollen gleiten und die Werkzeuge (81) zum Verschrauben, Verschweißen oder Verkleben der Einheit tragen.

## Claims

1. A process for fitting a tube (105) of a monitor to a front face frame (102) of the monitor, characterised in that it comprises the following stages:
a) positioning a front face frame (102) in a recess (2001) provided for the purpose;
b) holding the tube (105) lifted by blowing;
c) centring the tube (105) by means of two V-pieces (501, 521) that can be displaced simultaneously by moving together from either side of said tube, while ensuring that the tube is held lifted (105);
d) reversing the air flow to ensure that the tube (105) is held in a centred position by suction, then opening the V-pieces (501, 521);
e) lowering the tube (105) integral with the suction system (3) into the front face (102) to bring it to rest against fastening zones (1024) arranged around the periphery of the frame (102) of the front face;
f) fastening the tube (105) firmly to the front face (102);
g) stopping the suction and releasing the assembly when fitted together.

2. A fitting process according to Claim 1, characterised in that, between stage (a) and stage (b) it comprises a stage of positioning damping washers (104) on the zones (1024) for fastening the frame (102), onto which washers the tube (105) is then brought to rest.

3. A fitting process according to Claim 1 or 2, characterised in that, between stage (d) and stage (e) it comprises a stage of positioning damping washers (106) on the tube and of positioning a subrack (110) on these washers (106).

4. A machine for fitting a monitor tube to a front face frame (102) allowing the implementation of the process according to one of Claims 1 to 3, characterised in that it comprises a table (20) provided with a recess (2001) intended to receive the front face (102) of the monitor forming a frame, said recess (2001) comprising in its centre an opening (200), a suction cup (3) for suction or blowing, movable along a vertical axis passing through the centre of symmetry of the recess (2001) and actuated by a jack (4), a device (50, 52) for centring the cathode tube actuated by a jack (63), a set of two movable plates (70, 72) controlled in transverse displacement relative to the opening by jacks (80, 82) in order to bring the fastening tools (81) into position.

5. A machine according to Claim 4, characterised in that the centring device is constituted by a pair of sets (201, 202, 207, 208) (203, 204, 205, 206) of columns mounted vertically on the table (20) and supporting rollers at their ends, each set forming a travelling path for the centring plates (50, 52) arranged on either side of the opening (200), said centring plates (50, 52) comprising fingers (501, 521) that are V-shaped at the sides adjacent to the opening (200) and an oblique slot (502, 522) oriented from right to left for the plate (50) located to the left of the opening and from left to right for the plate (52) located to the right of the opening and inclined so as to control the moving together of the centring plates when an actuation finger (601, 621), controlled by a jack (63), is displaced.

6. A machine according to Claim 5, characterised in that the actuation fingers (601, 621) are integral with a U-shaped part constituted by two plates (60, 62) connected by a transverse bar (61) actuated by a single jack (63), and the legs of which U slide between the rollers in a direction perpendicular to the direction of sliding of the centring plates (50, 52).

7. A machine according to Claim 4 or 5, characterised in that the two plates (60, slide between the rollers and support the screwing (81) or welding or gluing tools of the assembly.
